# EUROPÄISCHE PATENTSCHRIFT

(11) **EP 0 478 940 B1**
(45) Veröffentlichungstag und Bekanntmachung des Hinweises auf die Patenterteilung: **14.06.1995**
(21) Anmeldenummer: 91114047.3
(22) Anmeldetag: 22.08.1991
(51) Int. Cl.: A01D 34/30, A01D 34/23

(54) **Getreidemähwerk oder Vorsatz-Schneidwerk, insbesondere zum Schneiden von Raps, für Mähdrescher**
Reaper or mowing attachment, especially for harvesting rape, for a combine harvester
Faucheuse à céréales ou tablier de coupe, en particulier pour le colza, pour une moissonneuse-batteuse

(30) Priorität: 31.08.1990 DE 4027727
(43) Veröffentlichungstag der Anmeldung: 08.04.1992
(73) Patentinhaber: Städtler, Walter, D-91207 Lauf (DE)
(72) Erfinder: Städtler, Walter, W-8560 Lauf-Simonshofen (DE); Gebhard, Reinhard, W-8560 Lauf-Simonshofen (DE)
(74) Vertreter: Rau, Manfred, Dr. Dipl.-Ing.

(56) Entgegenhaltungen:
- DD-A- 215 450
- DE-A- 2 444 173
- DE-A- 3 512 619
- US-A- 2 686 998
- US-A- 4 402 174

## Beschreibung

Die Erfindung betrifft ein Getreidemähwerk bzw. Vorsatz-Schneidwerk nach dem Oberbegriff des Anspruches 1 bzw. 2; ein derartiges Mähwerk ist bereits aus DD-A-215 450 bekannt.

Bei Getreidemähwerken an Mähdreschern bzw. Vorsatz-Schneidwerken an solchen Getreidemähwerken besteht grundsätzlich das Problem, daß durch den oszillierenden Antrieb der Messer Schwingungen entstehen, die zu einem unruhigen Lauf und Vibrationen der Maschine führen und somit Lärmbelästigungen und beispielsweise schädliche Auswirkungen auf die Gesundheit der Maschinenführer mit sich bringen. Die Schwingungen können insbesondere auch zu sogenannten Schüttelverlusten beim Ernten führen, was insbesondere bei der Rapsernte ein Problem darstellt. Raps ist nämlich besonders schwer verlustfrei oder verlustarm zu schneiden, da die Rapshalme sich sehr stark auf dem Feld verfilzen und da die Schoten, in denen die ölhaltigen Rapskörner sich befinden, bei Vibrationen verhältnismäßig leicht aufspringen. Aus diesem Grunde kann Raps mit Mähdreschern mit normalem Getreidemähwerk nur unter extrem hohen Verlusten geschnitten werden. Aus diesem Grunde sind bereits Vorsatz-Schneidwerke der gattungsgemäßen Art entwickelt und hergestellt worden, mittels derer die vom Horizontalschneidwerk geschnittenen Halme auch an einer oder beiden Seitenbegrenzungen vertikal geschnitten werden, so daß gleichsam ein Block aus dem Rapsfeld herausgeschnitten wird. Dadurch wird das ansonsten auftretende intensive Schütteln der Rapshalme vor dem Schneidwerk reduziert, wodurch die Verluste an Rapskörnern bereits reduziert werden. Es hat sich herausgestellt, daß aber auch hierbei immer noch große Schüttelverluste beim Raps auftreten.

Der Erfindung liegt daher die Aufgabe zugrunde, ein Getreidemähwerk bzw. Vorsatz-Schneidwerk jeweils der gattungsgemäßen Art so auszugestalten, daß Schwingungen des Mäh- bzw. Schneidwerkes unterbunden und insbesondere die Schüttelverluste des Rapses weitestgehend reduziert werden.

Diese Aufgabe wird erfindungsgemäß durch die Merkmale in den Kennzeichnungsteilen der Ansprüche 1 bzw. 2 gelöst. Durch die erfindungsgemäß zumindest für das Mähwerk selbst bzw. für das Horizontalschneidwerk des Vorsatz-Schneidewerkes vorgesehene schwingungsdämpfende Kupplung mit einer großen Schwungmasse werden die durch den oszillierenden Antrieb der Messer entstehenden Schwingungen weitgehend gedämpft und somit nicht auf das gesamte Mähwerk bzw. Vorsatz-Schneidwerk übertragen. Die Kornverluste werden drastisch gesenkt. Auch für die Vertikalschneidwerke sind bei dem Vorsatz-Schneidwerk gemäß Anspruch 2 schwingungsdämpfende Einrichtungen vorgesehen.

Grundsätzlich kann die große Schwungmasse auch außerhalb der Kupplung angeordnet sein, zweckmäßig ist es aber nach Anspruch 3, sie innerhalb der Kupplung anzuordnen. Wenn - wie in Anspruch 4 vorausgesetzt - auch die Vertikalschneidwerke des Vorsatz-Schneidwerkes von hydraulischen Antriebsmotoren antreibbar sind, dann ist es nach Anspruch 4 von Vorteil, für die Vertikalschneidwerke einerseits und das Horizontalschneidwerk andererseits voneinander getrennte, d.h. unabhängige Hydraulikkreisläufe vorzusehen. Dazu können - was insbesondere in den Ansprüchen 5, 6, 7 im einzelnen angegebenen ist - alle Antriebsmotoren - und zwar auch der einzelne Antriebsmotor des Getreidemähwerks - mit optimal niedrigen Drehzahlen betrieben werden, wodurch wiederum ebenfalls die Vibrationen und damit die Kornverluste reduziert werden. Nach Anspruch 8 kann in vorteilhafter Weise der Antrieb der Antriebsmotoren sowohl des Getreidemähwerkes als auch des Vorsatz-Schneidwerkes vom Hauptantrieb des Mähdreschers abgeleitet werden.

Eine weitere Einrichtung zur Schwingungsdämpfung der Vertikalschneidwerke ist durch die besondere Ausgestaltung der Messer nach den Ansprüchen 9 bis 12 gegeben. Durch deren Ausgestaltung wird erreicht, daß zum einen die Messer mit ihren Spitzen leichter in den verfilzten Block von Rapshalmen eindringen und von der Spitze an schneiden. Zum anderen ist ein stärker ziehender und damit vibrationsärmerer Schnitt sichergestellt. Auch dies führt zu einer Reduktion der Kornverluste durch Schütteln der Rapshalme.

Nach Anspruch 13 ist es möglich, für die Druckbeaufschlagung des jeweiligen Antriebsmotors der horizontalen Messer des Getreidemähwerkes bzw. des Horizontalschneidwerkes des Vorsatz-Schneidwerkes dieselbe Hydraulikpumpe zu verwenden. Damit wird der konstruktive Aufwand insbesondere für das Vorsatz-Schneidwerk reduziert, da der Antriebsmotor seines Horizontalschneidwerkes keine eigene Hydraulikpumpe benötigt, sondern die ohnehin für den Antrieb des Getreidemähwerkes vorgesehene Pumpe verwendet.

Eine weitere Verringerung des konstruktiven Aufwandes wird durch eine Ausgestaltung des Getreidemähwerkes und Vorsatz-Schneidwerkes gemäß Anspruch 14 erzielt. Demnach wird eine einzige Antriebseinheit sowohl für den Antrieb der horizontalen Messer des Getreidemähwerkes als auch des Horizontalschneidwerkes des Vorsatz-Schneidwerkes verwendet. Soll ein Mähdrescher vom normalen Getreidemähbetrieb umgerüstet werden auf den Rapserntebetrieb, so genügt es, den Antriebsmotor des Getreidemähwerkes von diesem an das Vorsatz-Schneidwerk umzusetzen. Es wird also ein aufwendiger und kostenintensiver Hydraulikmotor am Vorsatz-Schneidwerk eingespart. Die zum Umsetzen des Antriebsmotors notwendige Umrüstzeit spielt dabei wegen der Möglichkeit, einfache Verbindungselemente zu verwenden eine untergeordnete Rolle. Darüber hinaus fallen die Erntezeiten für Raps und andere Getreidearten auseinander und somit verbleibt dazwischen genügend Zeit zum Umrüsten.

Weitere Merkmale, Vorteile und Einzelheiten der Erfindung ergeben sich aus der nachfolgenden Beschreibung von drei Ausführungsbeispielen anhand der Zeichnung. Es zeigt
- Fig.: 1 eine vereinfachte Darstellung des vorderen Bereichs eines konventionellen Mähdreschers mit einem Vorsatz-Schneidwerk nach der Erfindung,
- Fig. 2: eine erste Ausführungsform eines Vorsatz-Schneidwerkes in Seitenansicht,
- Fig. 3: eine Vorderansicht des Vorsatz-Schneidwerkes gemäß dem Sichtpfeil III in Fig. 2,
- Fig. 4: eine Draufsicht auf das Vorsatz-Schneidwerk gemäß dem Sichtpfeil IV in Fig. 2,
- Fig. 5: eine zweite Ausführungsform eines Vorsatz-Schneidwerkes in Seitenansicht,
- Fig. 6: das Vorsatz-Schneidwerk in Vorderansicht gemäß dem Sichtpfeil VI in Fig. 5,
- Fig. 7: eine Draufsicht auf das Vorsatz-Schneidwerk gemäß dem Sichtpfeil VII in Fig. 5 und
- Fig. 8: ein erfindungsgemäßes Getreidemähwerk in Seitenansicht.

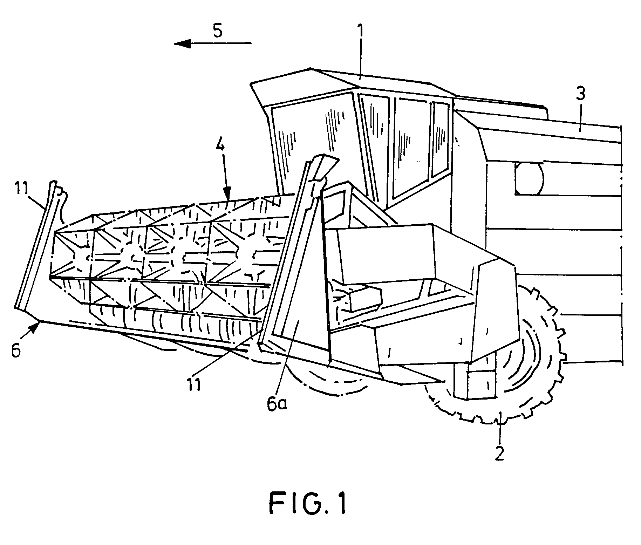

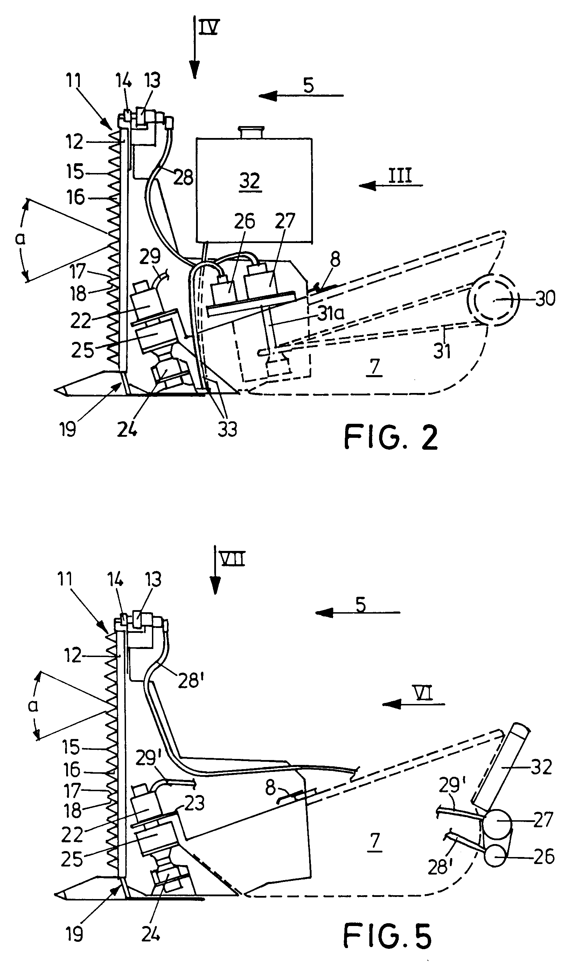

In Fig. 1 ist in stark schematisierter Darstellung ein Mähdrescher dargestellt, von dem das Fahrerhaus 1, die Vorderräder 2, der Kornbehälter 3 und das vordere Getreidemähwerk 4 erkennbar sind. An dem vorderen Getreidemähwerk 4 ist ein diesem in Fahrt- und Arbeitsrichtung 5 vorgeordnetes Vorsatz-Schneidwerk 6 lösbar angebracht. Eine erste Ausführungsform des Vorsatz-Schneidwerks 6 wird durch die Fig. 2 bis 4 veranschaulicht. Hierbei sind Teile des zur Grundausstattung des Mähdreschers gehörenden Getreidemähwerks 4 gestrichelt dargestellt. Das Getreidemähwerk 4 weist eine Wanne 7 auf, durch die das an deren Vorderkante mittels eines nicht dargestellten Schneidwerks geschnittene Getreide den Drescheinrichtungen zugeführt wird. An dieser Wanne 7 ist das Vorsatz-Schneidwerk 6 mittels seitlich angeordneter Schnellverschlüsse 8 lösbar angebracht. Das Schneidwerk 6 weist seitliche Stützwände 9 und eine etwas bis zu deren Vorderkante gezogene Bodenmulde 10 auf, die in die Wanne 7 übergeht. Das Vorsatz-Schneidwerk 6 ist in Fig. 1 mit Seitenabdeckungen 6a dargestellt, die in den Darstellungen gemäß Fig. 2 bis 7 fortgelassen sind.

An den Vorderkanten der Stützwände 9 ist jeweils ein Vertikalschneidwerk 11 angebracht, das aus zwei auf und ab gegensinnig antreibbaren Messerbalken besteht, von denen der Übersichtlichkeit halber nur ein Messerbalken 12 dargestellt ist. Jedes Paar von antreibbaren Messerbalken 12 wird von einem am oberen Ende der seitlichen Stützwand 9 angebrachten hydraulischen Antriebsmotor 13 mit einem Exzentertrieb 14 oszillierend angetrieben. Die dreieckförmig ausgebildeten, mit einer Spitze 15 versehenen Einzelmesser 16 mit zwei von der Spitze 15 nach hinten verlaufenden Schneiden 17,18 weisen einen Öffnungswinkel a von 30 bis 40° und bevorzugt 35° auf, wobei dieser Öffnungswinkel a naturgemäß auch dem Spitzen-Winkel entspricht. Die ortsfesten Messer sind in gleicher Weise ausgebildet.

Am vorderen Rand der Bodenmulde 10 ist ein Horizontalschneidwerk 19 angebracht, das in konventioneller Weise ebenfalls aus einem oszillierend antreibbaren Messerbalken 20 und nicht dargestellten ortsfesten Gegenmessern besteht. Der Messerbalken 20 weist Messer 21 mit abgeschrittener Spitze und einem Öffnungswinkel b von 55 bis 65, bevorzugt 60° auf. Der Antrieb erfolgt über einen hydraulischen Antriebsmotor 22, der seitlich an einer Stützwand 9 angebracht ist. Er ist an einer Lagerplatte 23, die wiederum an der Stützwand 9 angebracht ist, angeflanscht. Zwischen einem Exzentertrieb 24 für den Messerbalken 20 des Horizontalschneidwerks 19 und dem Antriebsmotor 22 ist eine schwingungselastische Kupplung 25 mit einer Schwungmasse angeordnet, wobei diese Schwungmasse - wie im Ausführungsbeispiel - innerhalb der Kupplung 25 oder auch außerhalb der Kupplung 25 angeordnet sein kann.

An der seitlichen Stützwand 9 sind weiterhin zwei Hydraulikpumpen 26, 27 angebracht. Die Hydraulikpumpe 26 dient zur Versorgung der Antriebsmotoren 13 für die Vertikalschneidwerke 11 über Hydraulikleitungen 28, während die Hydraulikpumpe 27 zur Versorgung des Antriebsmotors 22 für das Horizontalschneidwerk 19 über Hydraulikleitungen 29 dient. Der Antrieb dieser Hydraulikpumpen 26, 27 erfolgt vom Hauptantrieb 30 des Getreidemähwerks 4 beispielsweise über einen Keilriemen 31. Von diesem wird ein Verteilergetriebe 31a angetrieben, von dem wiederum die beiden Hydraulikpumpen 26, 27 angetrieben werden. Alternativ kann der Antrieb mittels Zapfwelle vom Messerantrieb des Normalschneidwerks oder von weiteren Stellen des Mähdreschers her erfolgen, wo dessen Antriebssystem angezapft werden kann. Für dieses in sich geschlossene, am Vorsatz-Schneidwerk 6 angebrachte Hydraulik-Antriebssystem ist ein Hydraulik-Behälter 32 vorgesehen, der an der Stützwand 9 angebracht ist, an der die Hydraulikpumpen 26, 27 nicht angebracht sind.

Diese beiden hydraulischen Antriebsmotoren 13 für die Messerbalken 12 der Vertikalschneidwerke 11 können sowohl gemeinsam als auch einzeln ein- bzw. abgeschaltet werden, da in der Regel beim Mähbetrieb nur ein Vertikalschneidwerk 11 benötigt wird. Durch die getrennten Hydraulikpumpen 26 und 27 für die Vertikalschneidwerke 11 einerseits und das Horizontalschneidwerk 19 andererseits wird zum einen ein in der Regel sehr ungenau arbeitender Mengenteiler für die Hydraulikflüssigkeit vermieden. Zum anderen führt dies dazu, daß die Antriebsmotoren 13 einerseits und der Antriebsmotor 22 andererseits unabhängig voneinander in ihrer Drehzahl gesteuert werden können, so daß wiederum das jeweils im Einsatz befindliche Vertikalschneidwerk 11 einerseits und das Horizontalschneidwerk 19 andererseits mit der niedrigstmöglichen und insbesondere mit unterschiedlichen, und zwar einstellbar unterschiedlichen und veränderlich unterschiedlichen Frequenzen angetrieben werden können. Dadurch werden die insgesamt erzeugten Vibrationen auf ein Minimum heruntergedrückt.

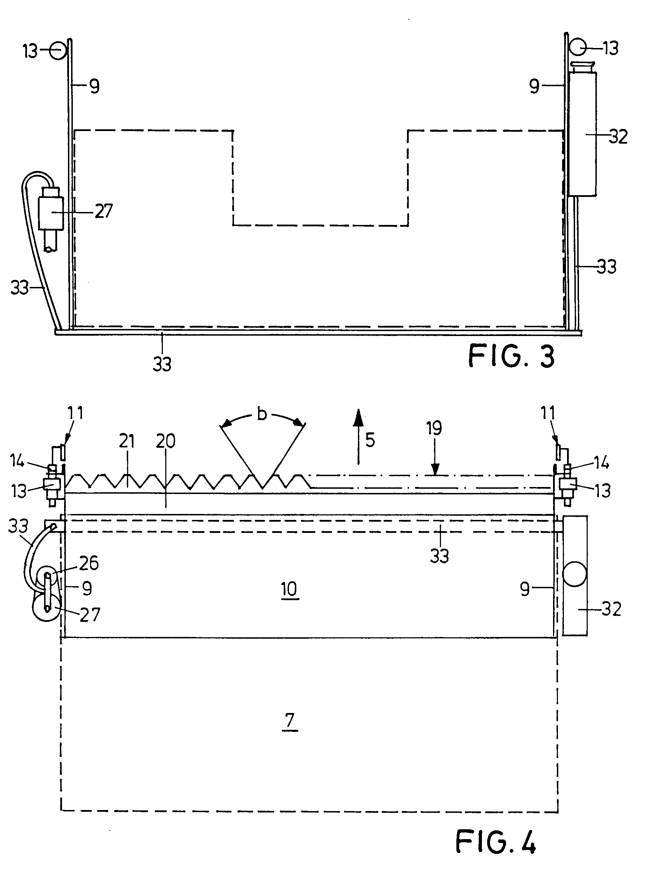

Wie den Fig. 3 und 4 entnehmbar ist, ist eine Verbindungsleitung 33 zwischen dem Behälter 32 und den Hydraulikpumpen 26,27 im vorderen Randbereich in die Bodenmulde 10 integriert und dient somit zu deren Aussteifung, so daß gerade im Bereich des vorderen Horizontalschneidwerks 19 das Vorsatz-Schneidwerk 6 zwischen den Stützwänden 9 ausreichend steif ist.

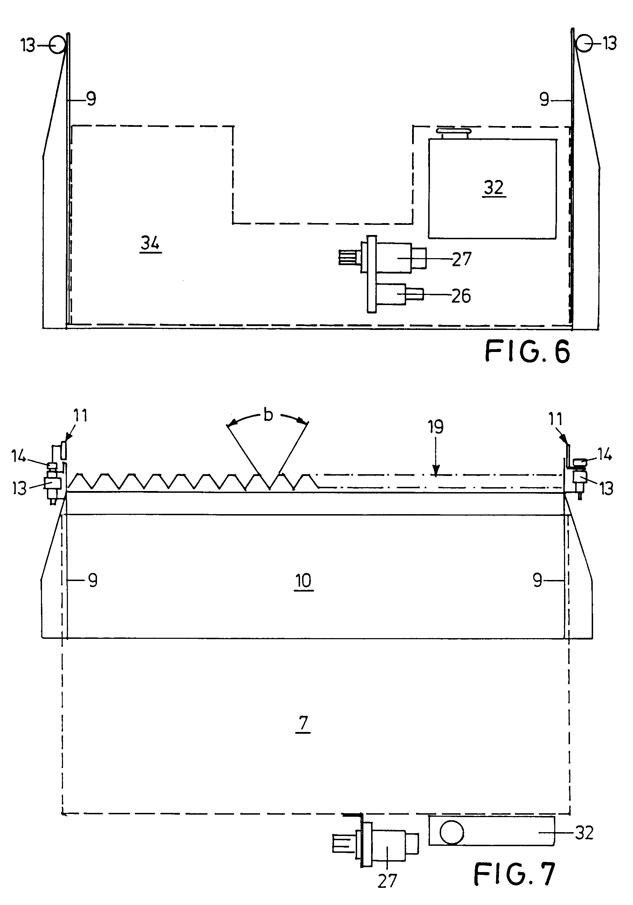

Die Ausführungsform eines Vorsatz-Schneidwerkes 6 nach den Fig. 5 bis 7 ist der Ausführungsform nach den Fig. 2 bis 4 hinsichtlich zahlreicher Einzelheiten gleich oder sehr ähnlich. Aus diesem Grunde werden für gleiche Teile die gleichen Bezugsziffern und für konstruktiv ähnliche, jedoch funktionell gleiche Teile die gleichen Bezugsziffern mit einem hochgesetzten Strich verwendet, ohne daß es im Einzelfall einer neuen Beschreibung bedarf. Bei diesem Ausführungsbeispiel sind die Hydraulikpumpen 26, 27 an der Rückwand 34 der Wanne 7 des Getreidemähwerks 4 angebracht. Gleiches gilt für den Hydraulik-Behälter 32. Der Antrieb der Hydraulikpumpen 26, 27 erfolgt in diesem Fall ebenfalls vom in dieser Zeichnung nicht dargestellten Hauptantrieb des Getreidemähwerks 4, und zwar mittels einer nicht dargestellten Zapfwelle. Die Hydraulikpumpen 26, 27 und der Hydraulik-Behälter 32 sind in diesem Fall fest an dem Mähdrescher in seiner Grundausstattung, also nicht am Vorsatz-Schneidwerk 6 angebracht. Die Hydraulikleitungen 28', 29' sind über nicht dargestellte Schnellkupplungen mit den Hydraulikpumpen 26, 27 verbindbar.

Selbstverständlich ist es auch möglich, die Hydraulikpumpen 26, 27 - wie bei der ersten Ausführungsform nach den Fig. 2 bis 4 - am Vorsatz-Schneidwerk 6 anzubringen und lediglich den Hydraulik-Behälter 32 an der Rückwand 34 der Wanne 7 anzubringen.

Bei den hydraulischen Antriebsmotoren 13 und 22 handelt es sich um Rotations-Antriebe, wobei üblicherweise hydrostatische Motoren eingesetzt werden.

Die schwingungsdämpfende Kupplung 25 kann auch bei Schneidwerken, beispielsweise normalen Getreidemähwerken, eingesetzt werden, bei denen keine Vertikalschneidwerke vorgesehen sind. Weiterhin kann die Ausgestaltung der Messer 16, wie sie bevorzugt für die Vertikalschneidwerke 11 beschrieben ist, auch für Horizontalschneidwerke eingesetzt werden und zwar auch unabhängig davon, ob Vertikalschneidwerke vorhanden sind oder nicht.

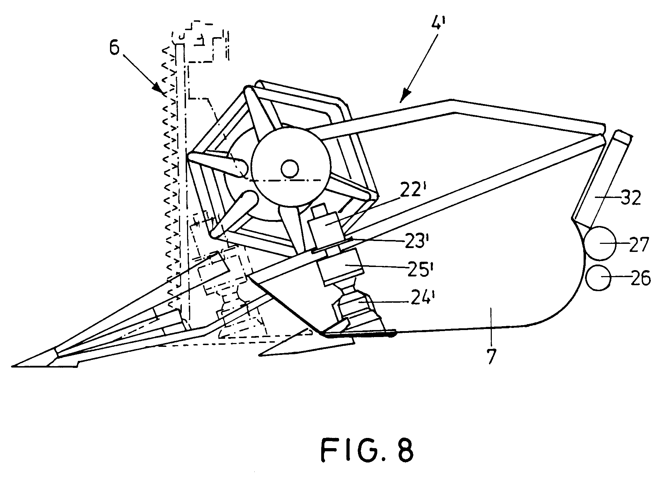

In Fig. 8 ist ein erfindungsgemäßes Getreidemähwerk 4' mit seiner Wanne 7 dargestellt, durch die das an deren Vorderkante mittels eines in der Zeichnung nicht erkennbaren Schneidwerkes mit horizontalen Messern geschnittene Getreide den Drescheinrichtungen zugeführt wird. Wie bereits anhand von Fig. 5 erläutert wurde, sind im rückwärtigen Bereich der Wanne 7 der Behälter 32 und die Hydraulikpumpen 26, 27 angebracht, die für die Druckbeaufschlagung der hydraulischen Antriebsmotoren des Getreidemähwerks 4 bzw. des strichliert in Fig. 8 angedeuteten Vorsatz-Schneidwerkes 6 sorgen.

Die horizontalen Messer des Schneidwerkes des Getreidemähwerkes 4' werden durch einen seitich außen an der Wanne 7 angeflanschten hydraulischen Antriebsmotor 22' angetrieben, der an einer Lagerplatte 23' angeflanscht ist. Zwischen dem Exzentertrieb 24' für den Messerbalken des Schneidwerkes und dem Antriebsmotor 22' ist eine schwingungselastische Kupplung 25' mit einer Schwungmasse angeordnet, die innerhalb der Kupplung 25' liegt.

Soll für die Rapsernte das Vorsatz-Schneidwerk 6 verwendet werden, so wird ein solches ohne Antriebseinheit an das Getreidemähwerk 4' angesetzt, die Antriebseinheit bestehend aus Antriebsmotor 22', Kupplung 25' mit Schwungmasse und Exzentertrieb 24' von letzterem abmontiert und am Vorsatz-Schneidwerk 6 angebracht, wobei der Antriebsmotor 22' nach wie vor über die Hydraulikpumpe 27 mit Druck beaufschlagt wird.

## Patentansprüche

1. Getreide-Mähwerk für einen Mähdrescher mit horizontalen, hin- und herbewegbaren Messern, deren Schneiden einen ziehenden Schnitt ausführen und die über einen Exzentertrieb in an sich bekannter Weise von einem hydraulischen Rotations-Antriebsmotor (22') antreibbar sind, der mittels einer Hydraulikpumpe (27) mit Druckflüssigkeit versorgbar ist, dadurch gekennzeichnet, daß zwischen dem Antriebsmotor (22') und dem Exzentertrieb (24') des Mähwerkes (4') eine elastische schwingungsdämpfende Kupplung (25') und eine große Schwungmasse angeordnet sind.

2. Vorsatz-Schneidwerk, insbesondere zum Schneiden von Raps, für Mähdrescher mit einem Getreidemähwerk (4, 4'), wobei das Vorsatz-Schneidwerk (6) als gesonderte, am Getreidemähwerk (4, 4') lösbar ankuppelbare Baueinheit ausgebildet ist, die ein Horizontalschneidwerk (19) und beiderseits von diesem je ein Vertikalschneidwerk (11) aufweist, wobei die Vertikalschneidwerke (11) und das Horizontalschneidwerk (19) hin- und herbewegbare Messer (16,21) mit einen ziehenden Schnitt ausführenden Schneiden (17,18) aufweisen, und wobei mindestens das Horizontalschneidwerk (19) über einen Exzentertrieb (24) in an sich bekannter Weise von einem hydraulischen Rotations-Antriebsmotor (22) antreibbar ist, der mittels einer Hydraulikpumpe (26) mit Druckflüssigkeit versorgbar ist, dadurch gekennzeichnet, daß mindestens zwischen dem Antriebsmotor (22) und dem Exzentertrieb (24) des Horizontalschneidwerks (19) eine elastische schwingungsdämpfende Kupplung (25) und eine große Schwungmasse angeordnet sind und daß den Vertikalschneidwerken (11) schwingungsdämpfende Einrichtungen zugeordnet sind.

3. Getreidemähwerk oder Vorsatz-Schneidwerk nach Anspruch 1 oder 2, dadurch gekennzeichnet, daß die Schwungmasse in die Kupplung (25, 25') integriert ist.

4. Vorsatz-Schneidwerk nach Anspruch 1, 2 oder 3, wobei auch die Vertikalschneidwerke (11) mittels hydraulischer Rotations-Antriebsmotoren (13) antreibbar sind, dadurch gekennzeichnet, daß für die Versorgung einerseits des Antriebsmotors (22, 22') für das Horizontalschneidwerk (19) und andererseits die Antriebsmotore (13) für die Vertikalschneidwerke (11) jeweils eine gesonderte Hydraulikpumpe (26, 27) vorgesehen ist.

5. Getreidemähwerk oder Vorsatz-Schneidwerk nach einem der Ansprüche 1 bis 4, dadurch gekennzeichnet, daß der oder die Antriebsmotore (13, 22, 22') stufenlos drehzahlregelbar sind.

6. Vorsatz-Schneidwerk nach Anspruch 5, dadurch gekennzeichnet, daß die Antriebsmotore (13,22) unabhängig voneinander stufenlos drehzahlregelbar sind.

7. Vorsatz-Schneidwerk nach einem der Ansprüche 2 bis 6, dadurch gekennzeichnet, daß die Antriebsmotore (13) für die Vertikalschneidwerke (11) unabhängig voneinander an- und ausschaltbar sind.

8. Getreidemähwerk oder Vorsatz-Schneidwerk nach einem der Ansprüche 1 bis 7, dadurch gekennzeichnet, daß die mindestens eine Hydraulikpumpe (26 bzw. 27) vom Hauptantrieb des Mähdreschers antreibbar ist.

9. Vorsatz-Schneidwerk nach einem der Ansprüche 2 bis 8, dadurch gekennzeichnet, daß als Einrichtungen zur Schwingungsdämpfung der Vertikalschneidwerke (11) mindestens die Messer (16) der Vertikalschneidwerke (11) mit einer Spitze (15) und einem kleinen Öffnungswinkel (a) ausgebildet sind.

10. Vorsatz-Schneidwerk nach Anspruch 9, dadurch gekennzeichnet, daß der Öffnungswinkel 30 bis 40° beträgt.

11. Vorsatz-Schneidwerk nach Anspruch 10, dadurch gekennzeichnet, daß der Öffnungswinkel (a) etwa 35° beträgt.

12. Vorsatz-Schneidwerk nach einem der Ansprüche 2 bis 11, dadurch gekennzeichnet, daß die Vertikalschneidwerke (10) gegensinnig antreibbare Messer (16) aufweisen.

13. Getreidemähwerk oder Vorsatz-Schneidwerk nach einem der Ansprüche 1 bis 11, dadurch gekennzeichnet, daß für die Druckbeaufschlagung des jeweiligen Antriebsmotors (22, 22') der horizontalen Messer des Getreidemähwerkes (4') bzw. des Horizontalschneidwerkes (19) des Vorsatz-Schneidwerkes (6) dieselbe Hydraulikpumpe (27) verwendbar ist.

14. Getreidemähwerk und Vorsatz-Schneidwerk nach Anspruch 13, dadurch gekennzeichnet, daß eine einzige Antriebseinheit (Antriebmotor 22', Exzentertrieb 24', Kupplung 25') für den Antrieb jeweils der horizontalen Messer des Getreidemähwerkes (4') oder des Horizontalschneidwerkes (19) des Vorsatz-Schneidwerkes (6) verwendbar ist, die zwischen Getreidemähwerk (4') und Vorsatz-Schneidwerk (19) umsetzbar ist.

## Claims

1. Reaper for a combine harvester, comprising horizontal reciprocating blades, the cutting edges of which make a draw cut, and which, by way of an eccentric drive, are drivable in a manner known per se by a hydraulic revolving cylinder engine (22'), which can be provided with hydraulic fluid by means of a hydraulic pump (27), characterized in that a flexible, vibration-damping coupling (25') and a big gyrating mass are disposed between the engine (22') and the eccentric drive (24') of the reaper (4').

2. Mowing attachment, in particular for the harvesting of rape, for combine harvesters having a reaper (4, 4'), the mowing attachment (6) being a separate constructional unit detachably connectable to the reaper (4, 4') and having a horizontal cutter bar (19), and a vertical cutter bar (11) on either side of the latter, the vertical cutter bars (11) and the horizontal cutter bar (19) having reciprocating blades (16, 21) with cutting edges (17, 18) making a draw cut, and at least the horizontal cutter bar (19) being drivable in a manner known per se by a hydraulic revolving cylinder engine (22) by way of an eccentric drive (24), characterized in that a flexible, vibration-damping coupling (25) and a big gyrating mass are disposed between the engine (22) and the eccentric drive (24) of the horizontal cutter bar (19) and in that vibration-damping devices are assigned to the vertical cutter bars (11).

3. Reaper or mowing attachment according to claim 1 or 2, characterized in that the gyrating mass is incorporated in the coupling (25, 25').

4. Mowing attachment according to claim 1, 2, or 3, the vertical cutter bars (11) also being drivable by means of hydraulic revolving cylinder engines (13), characterized in that a separate hydraulic pump (26, 27) is provided for the supply of the engine (22, 22') for the horizontal cutter bar (19) on the one hand and on the other, for the engines (13) for the vertical cutter bars (11).

5. Reaper or mowing attachment according to one of claims 1 to 4, characterized in that the engine or engines (13, 22, 22') are infinitely speed-variable.

6. Mowing attachment according to claim 5, characterized in that the engines (13, 22) are infinitely speed-variable independently of each other.

7. Mowing attachment according to one of claims 2 to 6, characterized in that the engines (13) for the vertical cutter bars (11) can be switched on and off independently of each other.

8. Reaper or mowing attachment according to one of claims 1 to 7, characterized in that the at least one hydraulic pump (26 and 27, respectively) is drivable by the main drive of the combine harvester.

9. Mowing attachment according to one of claims 2 to 8, characterized in that, as devices for the vibration-dampening of the vertical cutter bars (11), at least the blades (16) of the vertical cutter bars (11) are provided with a tip (15) and a small aperture angle (a).

10. Mowing attachment according to claim 9, characterized in that the aperture angle ranges from 30 to 40°.

11. Mowing attachment according to claim 10, characterized in that the aperture angle (a) is about 35°.

12. Mowing attachment according to one of claims 2 to 11, characterized in that the vertical cutter bars (10) have blades (16) drivable in an opposite direction.

13. Reaper or mowing attachment according to one of claims 1 to 11, characterized in that the same hydraulic pump (27) can be used for the pressurization of the respective engine (22, 22') of the horizontal blades of the reaper (4') and of the horizontal cutter bar (19) of the mowing attachment (6).

14. Reaper and mowing attachment according to claim 13, characterized in that a single drive unit (engine 22', eccentric drive 24', coupling 25') can be used for the drive of the horizontal blades of the reaper (4') or the horizontal cutter bar (19) of the mowing attachment (6), which drive unit is transferable between the reaper (4') and the mowing attachment (19).

## Revendications

1. Faucheuse à céréales pour une moissonneuse-batteuse avec des couteaux horizontaux à mouvement de va-et-vient, dont les lames effectuent une coupe en tirant, et lesquels, par la voie d'une commande excentrique, sont actionnables de façon connue en soi par un moteur hydraulique de commande à cylindre rotatif (22') qui est alimentable en fluide sous pression par le moyen d'une pompe hydraulique (27), caractérisée en ce qu'un coupleur (25') flexible amortisseur de vibrations et une grande masse mobile sont disposés entre le moteur de commande (22') et la commande excentrique (24') de la faucheuse (4').

2. Tablier de coupe, notamment pour couper le colza, pour des moissonneuses-batteuses avec une faucheuse à céréales (4, 4'), le tablier de coupe (6) formant une unité de construction séparée, qui peut être accouplée à la faucheuse (4, 4') de façon détachable et qui présente une barre de coupe horizontale (19) et, des deux côtés de celle-ci, une barre de coupe verticale (11), les barres de coupe verticales (11) et la barre de coupe horizontale (19) présentant des couteaux (16, 21) à mouvement de va-et-vient avec des lames (17, 18) qui effectuent une coupe en tirant, et au moins la barre de coupe horizontale (19) étant actionnable par la voie d'une commande excentrique (24) de façon connue en soi par un moteur hydraulique de commande à cylindre rotatif (22) qui est alimentable en fluide sous pression par le moyen d'une pompe hydraulique (26), caractérisé en ce qu'un coupleur (25) flexible amortisseur de vibrations et une grande masse mobile sont disposés au moins entre le moteur de commande (22) et la commande excentrique (24) et en ce que des dispositifs amortisseurs de vibrations sont conjugués aux barres de coupe verticales (11).

3. Faucheuse ou tablier de coupe selon la revendication 1 ou 2, caractérisés en ce que la masse mobile est intégrée au coupleur (25, 25').

4. Tablier de coupe selon la revendication 1, 2 ou 3, les barres de coupe verticales (11) étant également actionnables par le moyen de moteurs hydrauliques de commande à cylindres rotatifs (13), caractérisé en ce qu'une pompe hydraulique individuelle (26, 27) est prévue pour l'alimentation du moteur de commande (22, 22') pour la barre de coupe horizontale (19) d'une part, respectivement les moteurs de commande (13) pour les barres de coupe verticales (11) d'autre part.

5. Faucheuse ou tablier de coupe selon l'une quelconque des revendications 1 à 4, caractérisé en ce que le ou les moteurs de commande (13, 22, 22') sont des moteurs à vitesse continuellement réglable.

6. Tablier de coupe selon la revendication 5, caractérisé en ce que les moteurs de commande (13, 22) sont des moteurs à vitesse continuellement réglable indépendamment l'un de l'autre.

7. Tablier de coupe selon l'une quelconque des revendications 2 à 6, caractérisé en ce que les moteurs de commande (13) pour les barres de coupe verticales (11) peuvent être branchés et débranchés indépendamment l'un de l'autre.

8. Faucheuse ou tablier de coupe selon l'une quelconque des revendications 1 à 7, caractérisés en ce que la au moins une pompe hydraulique (26, respectivement 27) est actionnable par la commande principale de la moissonneuse-batteuse.

9. Tablier de coupe selon l'une quelconque des revendications 2 à 8, caractérisé en ce qu'en tant que dispositifs amortisseurs de vibrations des barres de coupe verticales (11), au moins les couteaux (16) des barres de coupe verticales (11) forment une pointe (15) et un petit angle d'ouverture (a).

10. Tablier de coupe selon la revendication 9, caractérisé en ce que l'angle d'ouverture est de 30 à 40°.

11. Tablier de coupe selon la revendication 10, caractérisé en ce que l'angle d'ouverture (a) s'élève à environ 35°.

12. Tablier de coupe selon l'une quelconque des revendications 2 à 11, caractérisé en ce que les barres de coupe verticales (10) présentent des couteaux (16) actionnables en sens inverse.

13. Faucheuse ou tablier de coupe selon l'une quelconque des revendications 1 à 11, caractérisés en ce que la même pompe hydraulique (27) est utilisable pour la pressurisation du moteur de commande (22, 22') des couteaux horizontaux de la faucheuse (4'), respectivement de la barre de coupe horizontale (19) du tablier de coupe (6).

14. Faucheuse et tablier de coupe selon la revendication 13, caractérisés en ce qu'une seule unité de commande (moteur de commande 22', commande excentrique 24', coupleur 25') est utilisable pour la commande des couteaux horizontaux de la faucheuse (4'), respectivement de la barre de coupe horizontale (19) du tablier de coupe (6), unité de commande qui est déplaçable entre la faucheuse (4') et le tablier de coupe (19).
